# EUROPEAN PATENT SPECIFICATION

(11) **EP 2 590 378 B1**
(45) Date of publication and mention of the grant of the patent: **26.12.2018**
(21) Application number: 11817794.8
(22) Date of filing: 18.08.2011
(51) Int. Cl.: H04L 29/06, H04L 12/18, H04N 7/18, H04L 29/08

(54) **METHOD AND SYSTEM FOR AUDIO BROADCAST IN VIDEO SURVEILLANCE**
VERFAHREN UND SYSTEM FÜR AUDIO-RUNDFUNK IN EINER VIDEOÜBERWACHUNG
PROCÉDÉ ET SYSTÈME DE RADIODIFFUSION AUDIO EN VIDÉOSURVEILLANCE

(30) Priority: 20.08.2010 CN 201010265080
(43) Date of publication of application: 08.05.2013
(73) Proprietor: ZTE Corporation, Shenzhen, Guangdong 518057 (CN)
(72) Inventor: YE, Xiaoyang, Shenzhen Guangdong 518057 (CN)
(74) Representative: Modiano, Micaela Nadia
(86) International application number: PCT/CN2011/078609
(87) International publication number: WO 2012/022267

(56) References cited:
- WO-A1-2009/060325
- WO-A2-2007/089383
- CN-A- 1 937 852
- CN-A- 1 983 982
- CN-A- 101 442 726
- US-A1- 2007 220 573

## Description

### TECHNICAL FIELD

The disclosure relates to the field of video surveillance techniques in mobile communications, in particular to a method and a system for implementing audio broadcast in video surveillance.

### BACKGROUND

There has been a considerable progress in video surveillance techniques in recent years with the rapid development of computer, network, and techniques in image processing and transmission. The new generation video surveillance system realizes media transmission via network, and performs remote video surveillance. No matter where a user is, he/she can employ a client, such as a computer, to log in to internet to access a network video surveillance system to obtain images and sound. The video surveillance applies widely to many sites such as banks, schools, hospitals, communities, road traffics, and the like due to its directness, convenience, and richness in information.

On the other hand, the current completely IP-based development accelerates the convergence of telecommunication and internet; end-to-end IP is the trend of network development; and an IP (Internet Protocol) Multimedia Subsystem (IMS) is proposed, which has the following features: irrelevance of access, which means that theoretically a home service can always be used, no matter what kind of equipment a user uses to access an IMS network, or where the user accesses the IMS network; a unified service triggering mechanism, wherein the IMS core controlling part does not implement any specific service, and all services, including traditionally supplementary services, are implemented by a service application platform; a unified route mechanism, wherein user-related data information is stored only at user home, and all user-related services must go through the user home; a unified user database, which mask the difference in service attribution between an immobile user and a mobile user; and full consideration of the requirement of the practical operation of operators, wherein relevant standards are made for the network framework, Quality of Service (OoS), security, billing, and intercommunication with other networks. The technical features and advantages of the IMS, such as unified access control, convergence of various multimedia services, and reliability of quality of a multimedia service, are being recognized by telecommunication operators, who are currently speeding up the layout of an IMS core network, and are gradually relocating various services onto the IMS core network.

The IMS is defined by the standard organization of the 3^{rd} Generation Partnership Project (3GPP) and is a blanket term for the logic functioning entities of the network core layer that control an IP multimedia service. The IMS uses an IP packet domain as a bearer channel for its control signalling and media transmission, uses the Session Initiation Protocol (SIP) as call control signalling, and realizes the separation of service management, session control, and bearer access and receives wide attentions increasingly due to its advantage in network convergence. For example, the telecommunication standardization sector of the International Telecommunications Union (ITU-T), the European Telecommunications Standards Institute (ETSI) and the like also uses the IMS as the core network for the definition of a next generation network.

The IMS supports access of an immobile network and a mobile network simultaneously, enabling the possibility of network convergence. The video surveillance service based on IMS can meet the requirement not only of an isolated dedicated network for a dedicated purpose, but also of a video surveillance service operation in statistical access authentication and security, while the current IMS video surveillance has not been capable of implementing the function of audio broadcast.

WO 2009/060325A1 discloses a method for the delivery of media streaming services in a mobile communication system.

US 2007/0220573A1 discloses unicasting and multicasting multimedia services.

WO 2007/089383A2 discloses wireless communication method and system for supporting multicast nearer services over an IP multimedia subsystem.

### SUMMARY

In view of the above aspects, the primary objective of the disclosure is to provide a method and a system for implementing audio broadcast in video surveillance capable of implementing the audio broadcast function based on IMS video surveillance.

To achieve this objective, the technical solution of the disclosure is implemented as follow.

The disclosure provides a method for implementing audio broadcast in video surveillance, including:
establishing, by a customer unit (CU), a media channel with an application server subsystem (AS) via a core unit of an IP multimedia subsystem (Core IMS), and establishing, by the AS, a media channel via the Core IMS with one or more premises units (PU) separately toward which the broadcast is to be directed; and broadcasting, by the CU, audio data to the each PU separately toward which the broadcast is to be directed via the media channel established between the CU and the AS and the media channel established between the AS and the each PU separately toward which the broadcast is to be directed when audio broadcast is performed.

In this solution, the establishing, by a CU, a media channel with an AS via a Core IMS, and establishing, by the AS, a media channel via the Core IMS with the each PU separately toward which the broadcast is to be directed may include:
sending out, by the CU, an audio broadcast request including an identifier for a PU toward which the broadcast is to be directed, and forwarding the audio broadcast request to the AS via the Core IMS; forwarding, by the AS, the audio broadcast request to the each PU separately toward which the broadcast is to be directed via the Core IMS according to the identifier for the each PU separately toward which the broadcast is to be directed in the audio broadcast request;
receiving, by the each PU separately toward which the broadcast is to be directed, the audio broadcast request respectively, returning, by the each PU separately toward which the broadcast is to be directed, an audio broadcast response to the AS via the Core IMS respectively, and forwarding, by the AS, the received audio broadcast response to the CU via the Core IMS; and
sending, by the CU, an audio broadcast acknowledgement to the AS via the Core IMS after the CU receives the audio broadcast response, and establishing, by the CU, a unidirectional media channel from the CU to the AS; forwarding respectively, by the AS, the audio broadcast acknowledgement to the each PU separately toward which the broadcast is to be directed via the Core IMS, and establishing respectively, by the AS, a unidirectional media channel from the AS to the each PU separately toward which the broadcast is to be directed.

In this solution, before the CU sends out the audio broadcast request, the method may further include: selecting, by the CU, a PU toward which broadcast is to be directed from a locally saved premises unit list, and acquiring, by the CU, an identifier for the PU toward which the broadcast is to be directed.

In this solution, the audio broadcast acknowledgement forwarded by the CU to the AS may include information of the unidirectional channel from the CU to the AS; and the audio broadcast acknowledgement forwarded by the AS to the each PU separately toward which the broadcast is to be directed may include information of the unidirectional channel from the AS to the each PU separately toward which the broadcast is to be directed.

In this solution, after the AS receives the audio broadcast request sent by the CU and before the AS respectively forwards the audio broadcast request to the each PU separately toward which the broadcast is to be directed via the Core IMS, the method may further include: performing, by the AS, service authorization after the AS receives the audio broadcast request sent by the CU, and after the service authorization succeeds, forwarding respectively, by the AS, the audio broadcast request to the each PU separately toward which the broadcast is to be directed via the Core IMS.

In this solution, the performing, by the AS, service authorization may include:
inquiring, by the AS, about user registration information corresponding to the CU according to the audio broadcast request, then determining, by the AS, whether the AS can forward the audio broadcast request to the each PU separately toward which the broadcast is to be directed according to the acquired user registration information; and/or determining, by the AS, whether the AS can forward the audio broadcast request to the each PU separately toward which the broadcast is to be directed according to the current operation state of the each PU separately toward which the broadcast is to be directed; and
when determining the AS can forward the audio broadcast request to the each PU separately toward which the broadcast is to be directed, forwarding, by the AS, the audio broadcast request to the each PU separately toward which the broadcast is to be directed; otherwise, returning, by the AS, information of audio broadcast request failure to the CU, and not forwarding, by the AS, the audio broadcast request.

In this solution, the broadcasting, by the CU, audio data to the each PU separately toward which the broadcast is to be directed may include: sending, by the CU, audio data to the AS via the unidirectional media channel from the CU to the AS, and forwarding, by the AS, the audio data to the each PU separately toward which the broadcast is to be directed via the unidirectional media channel from the AS to the each PU separately toward which the broadcast is to be directed.

In this solution, the method may further include:
when the audio broadcast needs to be stopped, disconnecting, by the CU, the media channel between the CU and the AS, and sending, by the CU, an audio broadcast stopping request to the AS via the Core IMS; and forwarding, by the AS, the audio broadcast stopping request to the each PU separately toward which the broadcast is to be directed via the Core IMS; and
receiving respectively, by the each PU separately toward which the broadcast is to be directed, the audio broadcast stopping request; disconnecting, by the each PU separately toward which the broadcast is to be directed, the media channel between the AS and the each PU separately toward which the broadcast is to be directed; returning, by the each PU separately toward which the broadcast is to be directed, to the AS an audio broadcast stopping response via the Core IMS; forwarding, by the AS, the audio broadcast stopping response to the CU via the Core IMS, and stopping the audio broadcast.

In this solution, the audio broadcast stopping request may be a message for requesting disconnection, and the audio broadcast stopping response may be a disconnection responding message.

The disclosure further provides a system for implementing audio broadcast in video surveillance, including an establishing unit and a transmitting unit, wherein the establishing unit is configured to establish, via a core unit of an IP multimedia subsystem (Core IMS), a media channel between a customer unit (CU) and an application server subsystem (AS), and a media channel between the AS and one or more premises units (PU) separately toward which the broadcast is to be directed; and the transmitting unit is configured to transmit audio data broadcast by the CU to the each PU separately toward which the broadcast is to be directed via the media channel between the CU and the AS established by the establishing unit and the media channel between the AS and the each PU separately toward which the broadcast is to be directed established by the establishing unit when audio broadcast is performed.

In this solution, the system may further include a disconnecting unit configured to disconnect the media channel between the CU and the AS established by the establishing unit and the media channel between the AS and the each PU separately toward which the broadcast is to be directed established by the establishing unit, and to stop the audio broadcast.

With the method and the system for implementing audio broadcast in video surveillance according to the disclosure, a CU establishes a media channel with an AS via a Core IMS, and the AS establishes, via the Core IMS, a media channel with each PU separately toward which the broadcast is to be directed, respectively; and the CU broadcasts audio data to the each PU separately toward which the broadcast is to be directed via the established media channels when audio broadcast is performed. Thus, the audio broadcast function of a video surveillance system based on IMS is implemented without any additional equipment in the video surveillance system, and the audio broadcast is completed by using the Core IMS to perform forwarding operations, which facilitates safe control and eases application and popularization.

### BRIEF DESCRIPTION OF THE DRAWINGS

Fig. 1 is the schematic view of the compositional structure of a video surveillance system based on IMS;
Fig. 2 is the schematic view of an interaction flow implementing audio broadcast in video surveillance according to the present disclosure; and
Fig. 3 is the schematic view of an interaction flow according to an embodiment of the present disclosure.

### DETAILED DESCRIPTION

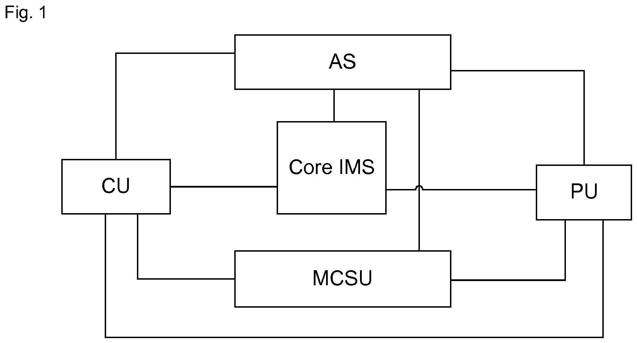

The present disclosure applies to a video surveillance system based on IMS. As shown in Fig. 1, the video surveillance system based on IMS mainly includes a premises unit (PU), a core unit of an IP multimedia subsystem (Core IMS), an application server subsystem (AS), a media control and storage server subsystem (MCSU), and a customer unit (CU). Wherein, the Core IMS is configured to forward video surveillance service control signaling and establish/remove a session. The AS processes service logics, and mainly includes functional entities including a service discovering functional entity (SDF), a service selecting functional entity (SSF), and a service controlling functional entity (SCF). The MCSU implements media forwarding/distributing/transcoding/storing and the like, and provides a streaming media service. The PU is in charge of collecting and encoding surveillance information. The CU provides various interfaces of the video surveillance service for a user. In a practical application, one or more PUs may be included in the video surveillance system based on IMS.

The main idea of the disclosure is to provide a method for implementing audio broadcast in video surveillance, wherein in the video surveillance system based on IMS, a CU establishes a media channel with an AS via a Core IMS, and the AS establishes a media channel via the Core IMS with one or more PUs separately toward which broadcast is to be directed; and the CU broadcasts audio data to the one or more PUs separately toward which the broadcast is to be directed via the media channel established between the CU and the AS and the media channel established between the AS and the each PU when audio broadcast is performed.

The disclosure further provides a system for implementing audio broadcast in video surveillance including an establishing unit and a transmitting unit, wherein the establishing unit is configured to establish, via a Core IMS, a media channel between a CU and an AS, and a media channel between the AS and one or more PUs separately toward which the broadcast is to be directed; and the transmitting unit is configured to transmit audio data broadcast by the CU to the each PU via the media channels between the CU and the AS and between the AS and the each PU established by the establishing unit when audio broadcast is performed.

Wherein, the system may further include a disconnecting unit configured to disconnect the media channels between the CU and the AS and between the AS and the each PU established by the establishing unit, and to stop audio broadcast.

In a practical application, the establishing unit, transmitting unit, and disconnecting unit may be arranged on the CU, Core IMS, AS, and PU in the video surveillance system based on IMS, respectively, or be arranged separately and implement audio broadcast in the video surveillance system based on IMS by interacting with the CU, Core IMS, AS, and PU.

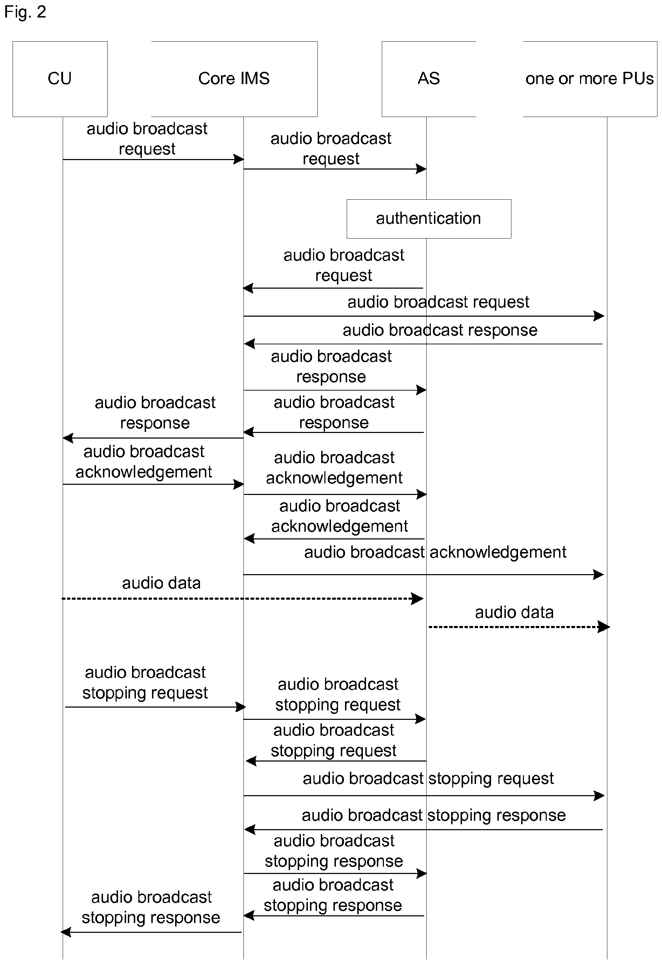

Specifically, as shown in Fig. 2, the process in which the CU establishes a media channel with the AS via the Core IMS and the AS establishes a media channel via the Core IMS with the each PU is as follows: the CU first selects a PU toward which broadcast is to be directed from a locally saved premises unit list, and acquires an identifier for the PU toward which the broadcast is to be directed, then sends out an audio broadcast request including the identifier for the PU toward which the broadcast is to be directed, and forwards the audio broadcast request to the AS via the Core IMS; the AS forwards the audio broadcast request respectively to the each PU separately toward which the broadcast is to be directed via the Core IMS according to the identifier for the PU toward which the broadcast is to be directed in the audio broadcast request; the each PU separately toward which the broadcast is to be directed receives the audio broadcast request respectively, and returns an audio broadcast response to the AS via the Core IMS respectively; the AS forwards the audio broadcast response to the CU via the Core IMS; and the CU forwards an audio broadcast acknowledgement to the AS via the Core IMS after receiving the audio broadcast response, and establishes a unidirectional media channel from the CU to the AS; the AS forwards the audio broadcast acknowledgement to the each PU separately toward which the broadcast is to be directed via the Core IMS, and establishes, respectively, a unidirectional media channel from the AS to the each PU separately toward which the broadcast is to be directed. Wherein, after the AS receives the audio broadcast request sent by the CU and before respectively forwards the audio broadcast request to the each PU separately toward which the broadcast is to be directed via the Core IMS, the AS optionally performs service authorization, and respectively forwards the audio broadcast request to said one or more PUs via the Core IMS after the service authorization succeed.

Here the process of establishing unidirectional media channels between the CU and the AS and between the AS and the each PU may be implemented by a session establishing flow of the Core IMS.

Here the CU may select one or more PUs separately toward which the broadcast is to be directed, and the number of the PU(s) may be determined according to the requirement of a practical application. The identifier for the PU toward which the broadcast is to be directed included in the audio broadcast request may be information such as the IP address of the PU toward which the broadcast is to be directed.

Wherein, the audio broadcast acknowledgement forwarded by the CU to the AS includes information of the unidirectional channel from the CU to the AS; and the audio broadcast acknowledgement forwarded by the AS to a PU toward which the broadcast is to be directed includes information of the unidirectional channel from the AS to the PU.

Specifically, the information of the unidirectional channels may include an IP address for receiving a media flow, a TCP/UDP port number, or may also include a proposed session identifier and channel identifier.

Wherein, the process of performing, by the AS, service authorization includes: after receiving the audio broadcast request sent by the CU, the AS inquires about user registration information corresponding to the CU according to the audio broadcast request, determines whether the AS can forward the audio broadcast request to the each PU according to the acquired user registration information; and/or determines, after receiving the audio broadcast request sent by the CU, whether the AS can forward the audio broadcast request to the each PU according to the current operation state of the each PU separately toward which the broadcast is to be directed; if it is determined that the AS can forward the audio broadcast request to the each PU, the AS forwards the audio broadcast request to the each PU, otherwise, the AS returns information of audio broadcast request failure to the CU, and does not forward the audio broadcast request.

Wherein, the user registration information may include information on legitimacy, information on whether authorization is given to perform audio broadcast with the PU, and the like. The current operation state of the PU may specifically include: whether the PU is performing exclusive audio broadcast with another CU, whether current free resources of the PU can support current audio broadcast, and the like.

Wherein, as shown in Fig. 2, the specific process of broadcasting, by the CU, audio data to the each PU via the media channels established between the CU and the AS and between the AS and the each PU when audio broadcast is performed includes: the CU sends audio data to the AS via the unidirectional media channel from the CU to the AS, and then the AS forwards the audio data to the each PU via the unidirectional media channel from the AS to the each PU separately toward which the broadcast is to be directed.

As shown in Fig. 2, when audio broadcast needs to be stopped, the method further includes: the CU disconnects the media channel between the CU and the AS, and sends an audio broadcast stopping request to the AS via the Core IMS; the AS forwards the audio broadcast stopping request to the each PU separately toward which the broadcast is to be directed via the Core IMS; the each PU separately toward which the broadcast is to be directed respectively receives the audio broadcast stopping request, disconnects the media channel from the AS to the each PU separately toward which the broadcast is to be directed, and returns to the AS an audio broadcast stopping response via the Core IMS; the AS forwards the audio broadcast stopping response to the CU via the Core IMS; and the audio broadcast stops.

Wherein, the audio broadcast stopping flow may be implemented by a session removing flow of the Core IMS in video surveillance based on IMS; the audio broadcast stopping request may be a disconnection requesting message in the session removing process, and correspondingly, the audio broadcast stopping response may be a disconnection responding message.

The specific implementation of the disclosure will be further elaborated below with reference to the figures.

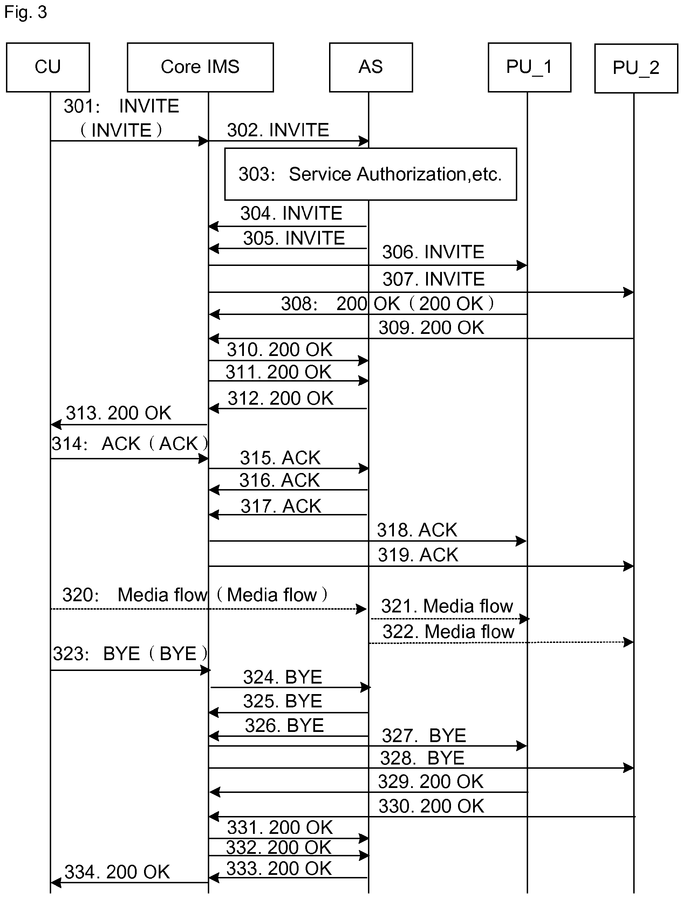

Referring to Fig. 3, the video surveillance system based on IMS includes two Pus, namely, PU_1 and PU_2. The process of implementing the audio broadcast function of the system according to the method provided by the disclosure specifically includes the following flow.

Steps 301-307: the CU selects PU_1 and PU_2 separately toward which the broadcast is to be directed from a locally saved premises unit list, acquires identifiers for PU_1 and PU_2, and sends out an audio broadcast request including the identifiers for PU_1 and PU_2, that is, the request message (INVITE) in the SIP protocol, wherein the identifiers for PU_1 and PU_2 may be IP addresses of PU_1 and PU_2. The CU first routes the INVITE to the Core IMS, then the Core IMS forwards the INVITE to the AS; the AS performs service authorization as needed, and after the service authorization succeeds, the AS then forwards the INVITEs to be sent to PU_1 and PU_2 to the Core IMS, respectively, and then the Core IMS forwards respectively the respective INVITEs to PU_1 and PU_2.

Wherein, the AS includes the identifier for PU_1 into the INVITE to be sent to PU_1, and includes the identifier for PU_2 into the INVITE to be sent to PU_2, so that the Core IMS can send the INVITEs to the corresponding PUs.

Steps 308-313: PU_1 and PU_2 receive the INVITE respectively and return audio broadcast responses, namely response (200 OK) messages in the SIP protocol; PU_1 and PU_2 respectively route the 200 OK messages to the Core IMS, by which the 200 OK messages sent by PU_1 and PU_2 are respectively forwarded to the AS, and the AS then forwards the 200 OK messages to the CU via the Core IMS.

Wherein, PU_1 includes the identifier for PU_1 into the 200 OK message returned to the AS via the Core IMS, and PU_2 includes the identifier for PU_2 into the 200 OK message returned to the AS via the Core IMS; after receiving the 200 OK messages returned by PU_1 and PU_2, the AS forwards to the CU the 200 OK messages including the identifier for PU_1 and the identifier for PU_2 via the Core IMS.

Steps 314-319: after receiving the 200 OK messages, the CU sends, via the Core IMS, the AS audio broadcast response acknowledgement messages, namely, acknowledgement (ACK) messages in the SIP protocol, including information of a unidirectional channel from the CU to the AS, and establishes the unidirectional channel from the CU to the AS; the AS forwards, via the Core IMS, the ACK messages including information of corresponding unidirectional channels from the AS to PU_1 and PU_2 to PU_1 and PU_2, respectively, and establishes the unidirectional channels from the AS to PU_1 and to PU_2.

Wherein, the ACK messages sent out by the CU also include the identifiers for PU_1 and PU_2; the AS may also include the identifier for PU_1 into an ACK message sent to PU_1, and include the identifier for PU_2 into an ACK message sent to PU_2, to establish unidirectional channels with PU_1 and PU_2, respectively.

Steps 320-322: the CU sends, via the unidirectional channel from the CU to the AS, the AS an audio data packet (Media flow) to be broadcast, such as a Real-time Transport Protocol (RTP) data packet born by the User Datagram Protocol (UDP); the AS forwards the audio data packet to PU_1 via the unidirectional channel from the AS to PU_1, and forwards the audio data packet to PU_2 via the unidirectional channel from the AS to PU_2; and PU_1 and PU_2 respectively receive the audio data packet, decode and play the audio data packet.

Steps 323-328: when the audio broadcast needs to be stopped, the CU sends the Core IMS a message for requesting disconnection, such as a goodbye message (BYE) in the SIP protocol, and simultaneously disconnects the unidirectional channel from the CU to the AS; the Core IMS then forwards the BYE to the AS, which forwards the BYE via the Core IMS to PU_1 and PU_2 respectively, then the PU_1 and PU_2 receive the BYE respectively and disconnect the unidirectional channels from the AS to PU_1 and PU_2, respectively.

Wherein, the BYE message sent out by the CU may also include the identifiers for PU_1 and PU_2; the AS may also include the identifier for PU_1 into the BYE message to be sent to PU_1, and include the identifier for PU_2 into the BYE message to be sent to PU_2, so that the Core IMS can send the BYE to the corresponding PUs.

Steps 329-334: PU_1 and PU_2 respectively send out disconnection responding messages (such as a 200 OK message in the SIP protocol), both being forwarded to the AS via the Core IMS; the AS forwards the 200 OK messages via the Core IMS to the CU; the CU receives the 200 OK messages; and the audio broadcast stops.

Wherein, the 200 OK message returned to the AS by PU_1 via the Core IMS may also include the identifier for PU_1, and the 200 OK message returned to the AS by PU_2 via the Core IMS may also include the identifier for PU_2; after the AS receives the 200 OK messages returned by PU_1 and PU_2, the 200 OK messages forwarded by the AS to the CU via the Core IMS may include the identifier for PU_1 and the identifier for PU_2.

## Claims

1. A method for implementing audio broadcast in video surveillance, **characterized by** comprising:
establishing, by a customer unit, CU, a media channel with an application server subsystem, AS, via a core unit of an Internet Protocol, IP, multimedia subsystem, Core IMS, and establishing, by the AS, a media channel via the Core IMS with one or more premises units, PUs, toward which broadcast is to be directed; and
broadcasting, by the CU, audio data to the each PU toward which the broadcast is to be directed via the media channel established between the CU and the AS and the media channel established between the AS and the each PU toward which the broadcast is to be directed when audio broadcast is performed;
wherein the establishing, by a CU, a media channel with an AS via a Core IMS, and establishing, by the AS, a media channel via the Core IMS with one or more PUs toward which the broadcast is to be directed comprises:
sending out, by the CU, an audio broadcast request including an identifier for each PU toward which the broadcast is to be directed, and forwarding the audio broadcast request to the AS via the Core IMS (S301, S302); forwarding, by the AS, the audio broadcast request to the each PU toward which the broadcast is to be directed via the Core IMS according to the identifier for the each PU toward which the broadcast is to be directed in the audio broadcast request (S304, S305, S306, S307);
receiving, by the each PU toward which the broadcast is to be directed, the audio broadcast request respectively, returning, by the each PU toward which the broadcast is to be directed, an audio broadcast response to the AS via the Core IMS respectively (S308, S309, S310, S311), and forwarding, by the AS, the received audio broadcast response to the CU via the Core IMS (S312, S313); and
sending, by the CU, an audio broadcast acknowledgement to the AS via the Core IMS after the CU receives the audio broadcast response, and establishing, by the CU, a unidirectional media channel from the CU to the AS (S314, S315); forwarding respectively, by the AS, the audio broadcast acknowledgement to the each PU toward which the broadcast is to be directed via the Core IMS, and establishing respectively, by the AS, a unidirectional media channel from the AS to the each PU toward which the broadcast is to be directed (S316, S317, S318, S319).

2. The method for implementing audio broadcast in video surveillance according to claim 1, further comprising: before sending out, by the CU, the audio broadcast request,
selecting, by the CU, a PU toward which broadcast is to be directed from a locally saved premises unit list, and acquiring, by the CU, an identifier for the PU toward which the broadcast is to be directed.

3. The method for implementing audio broadcast in video surveillance according to claim 1, wherein the audio broadcast acknowledgement forwarded by the CU to the AS includes information of the unidirectional channel from the CU to the AS; and the audio broadcast acknowledgement forwarded by the AS to the each PU toward which the broadcast is to be directed includes information of the unidirectional channel from the AS to the each PU toward which the broadcast is to be directed.

4. The method for implementing audio broadcast in video surveillance according to claim 1, further comprising: after receiving, by the AS, the audio broadcast request sent by the CU and before forwarding respectively, by the AS, the audio broadcast request to the each PU toward which the broadcast is to be directed via the Core IMS,
performing, by the AS, service authorization after the AS receives the audio broadcast request sent by the CU (S303), and after the service authorization succeeds, forwarding respectively, by the AS, the audio broadcast request to the each PU toward which the broadcast is to be directed via the Core IMS.

5. The method for implementing audio broadcast in video surveillance according to claim 4, wherein the performing, by the AS, service authorization comprises:
inquiring, by the AS, about user registration information corresponding to the CU according to the audio broadcast request, then determining, by the AS, whether the AS can forward the audio broadcast request to the each PU toward which the broadcast is to be directed according to the acquired user registration information; and/or determining, by the AS, whether the AS can forward the audio broadcast request to the each PU toward which the broadcast is to be directed according to the current operation state of the each PU toward which the broadcast is to be directed; and
when determining the AS can forward the audio broadcast request to the each PU toward which the broadcast is to be directed, forwarding, by the AS, the audio broadcast request to the each PU toward which the broadcast is to be directed; otherwise, returning, by the AS, information of audio broadcast request failure to the CU, and not forwarding, by the AS, the audio broadcast request.

6. The method for implementing audio broadcast in video surveillance according to any one of claims 1 to 5, wherein the broadcasting, by the CU, audio data to the each PU toward which the broadcast is to be directed comprises:
sending, by the CU, audio data to the AS via the unidirectional media channel from the CU to the AS, and forwarding, by the AS, the audio data to the each PU toward which the broadcast is to be directed via the unidirectional media channel from the AS to the each PU toward which the broadcast is to be directed.

7. The method for implementing audio broadcast in video surveillance according to any one of claims 1 to 5, further comprising:
when the audio broadcast needs to be stopped, disconnecting, by the CU, the media channel between the CU and the AS, and sending, by the CU, an audio broadcast stopping request to the AS via the Core IMS; and forwarding, by the AS, the audio broadcast stopping request to the each PU toward which the broadcast is to be directed via the Core IMS; and
receiving respectively, by the each PU toward which the broadcast is to be directed, the audio broadcast stopping request; disconnecting, by the each PU toward which the broadcast is to be directed, the media channel between the AS and the each PU toward which the broadcast is to be directed; returning, by the each PU toward which the broadcast is to be directed, to the AS an audio broadcast stopping response via the Core IMS; forwarding, by the AS, the audio broadcast stopping response to the CU via the Core IMS, and stopping the audio broadcast.

8. The method for implementing audio broadcast in video surveillance according to claim 7, wherein the audio broadcast stopping request is a message for requesting disconnection, and the audio broadcast stopping response is a disconnection responding message.

9. A system for implementing audio broadcast in video surveillance, **characterized by** comprising a customer unit, CU, an application server subsystem, AS, a core unit of an Internet Protocol, IP, multimedia subsystem, Core IMS, and one or more premises units, PUs toward which broadcast is to be directed, wherein
the CU is configured to establish, via a core unit of an Internet Protocol, IP, multimedia subsystem, Core IMS, a media channel between a customer unit, CU, and an application server subsystem, AS, and transmit audio data broadcast to the each PU toward which the broadcast is to be directed via the media channel between the CU and the AS and a media channel between the AS and the each PU toward which the broadcast is to be directed when audio broadcast is performed;
the AS is configured to establish, via the Core IMS, the media channel between the AS and the each PU toward which the broadcast is to be directed;
the CU is further configured to send out an audio broadcast request including an identifier for each PU toward which the broadcast is to be directed, and forward the audio broadcast request to the AS via the Core IMS;
the AS is further configured to forward the audio broadcast request to the each PU toward which the broadcast is to be directed via the Core IMS according to the identifier for the each PU toward which the broadcast is to be directed in the audio broadcast request,
the each PU toward which the broadcast is to be directed is configured to receive the audio broadcast request respectively, and return an audio broadcast response to the AS via the Core IMS respectively;
the AS is further configured to forward the received audio broadcast response to the CU via the Core IMS;
the CU is further configured to send an audio broadcast acknowledgement to the AS via the Core IMS after receiving the audio broadcast response, and establish a unidirectional media channel from the CU to the AS;
the AS is configured to respectively forward the audio broadcast acknowledgement to the each PU toward which the broadcast is to be directed via the Core IMS, and respectively establish a unidirectional media channel from the AS to the each PU toward which the broadcast is to be directed.

10. The system for implementing audio broadcast in video surveillance according to claim 9, wherein the CU is further configured to disconnect the media channel between the CU and the AS when the audio broadcast needs to be stopped, and send an audio broadcast stopping request to the AS via the Core IMS;
the AS is further configured to forward the audio broadcast stopping request to the each PU toward which the broadcast is to be directed via the Core IMS; and forward an audio broadcast stopping response returned by the each PU toward which the broadcast is to be directed to the CU via the Core IMS, and stop the audio broadcast;
the each PU toward which the broadcast is to be directed is further configured to receive the audio broadcast stopping request respectively, disconnect the media channel between the AS and the each PU toward which the broadcast is to be directed, and return to the AS the audio broadcast stopping response via the Core IMS.

## Patentansprüche

1. Ein Verfahren zur Implementierung von Tonübertragung in Videoüberwachung, **dadurch gekennzeichnet, dass** es Folgendes umfasst:
Einrichten, durch eine Teilnehmereinheit, CU, eines Medienkanals mit einem Applikationsserver-Subsystem, AS, über eine Kerneinheit eines Internetprotokolls, IP, Multimedia Subsystems, Kern IMS, und Einrichten durch das AS, eines Medienkanals über das Kern IMS mit einer oder mehreren Betriebsstätten, PUs, in dessen Richtung die Übertragung gerichtet werden soll; und
Übertragen, durch die CU, von Audiodaten an jede PU, in dessen Richtung die Übertragung gerichtet werden soll über den Medienkanal, der zwischen der CU und dem AS errichtet wurde, und dem Medienkanal, der zwischen dem AS und jeder PU errichtet wurde, in dessen Richtung die Übertragung gerichtet werden soll, wenn Tonübertragung durchgeführt wird;
worin das Einrichten durch eine CU, eines Medienkanals mit einem AS über ein Kern IMS, und das Einrichten, das durch das AS eines Medienkanals über das Kern IMS mit einer oder mehreren PUs, in dessen Richtung die Übertragung gerichtet werden soll, Folgendes umfasst:
Senden, durch die CU, einer Übertragungsanfrage einschließlich einer Kennung für jede PU, in dessen Richtung die Übertragung gerichtet werden soll, und Weiterleiten der Audioübertragungsanfrage an das AS über das Kern IMS (S301, S302); Weiterleiten, durch das AS, der Audioübertragungsanfrage an jede PU, in dessen Richtung die Übertragung gerichtet werden soll über das Kern IMS gemäß der Kennung für jede PU, in dessen Richtung die Übertragung gerichtet werden soll, in der Audioübertragungsanfrage (S304, S305, S306, S307);
Empfangen, durch jede PU, in dessen Richtung die Übertragung gerichtet werden soll, der Audioübertragungsanfrage bzw. Zurückführen, durch jede PU, in deren Richtung die Übertragung gerichtet werden soll, einer Audioübertragungsantwort an das AS über das Kern IMS (S308, S309, S310, S311), und Weiterleiten, durch das AS, der empfangenen Audioübertragungsantwort an die CU über das Kern IMS (S312, S313); und
Senden, durch die CU, einer Tonübertragungsbestätigung an das AS über das Kern IMS nach dem die CU die Tonübertragungsantwort empfängt, und Einrichten, durch die CU, eines unidirektionalen Medienkanals von der CU zu dem AS (S314, S315); jeweils Weiterleiten, durch das AS, der Tonübertragungsbestätigung an jede PU, in deren Richtung die Übertragung gerichtet werden soll, über das Kern IMS und jeweils Einrichten, durch das AS, eines unidirektionalen Medienkanals von dem AS zu jeder PU, in deren Richtung die Übertragung gerichtet werden soll (S316, S317, S318, S319).

2. Das Verfahren zur Implementierung von Tonübertragung in Videoüberwachung gemäß Anspruch 1, weiter umfassend: vor dem Senden, durch die CU, der Tonübertragungsanfrage, Auswählen durch die CU, einer PU, in deren Richtung die Übertragung gerichtet werden soll von einer lokal gespeicherten Betriebsstättenliste, und Erfassen, durch die CU, einer Kennung für die PU, in deren Richtung die Übertragung gerichtet werden soll.

3. Das Verfahren zur Implementierung von Tonübertragung in Videoüberwachung gemäß Anspruch 1, worin die Tonübertragungsbestätigung, weitergeleitet durch die CU an das AS, eine Information des unidirektionalen Kanals von der CU zu dem AS einschließt; und die Tonübertragungsbestätigung, die durch das AS an jede PU, in deren Richtung die Übertragung gerichtet werden soll, weitergeleitet wurde, schließt Information des unidirektionalen Kanals von dem AS zu jeder PU, in deren Richtung die Übertragung gerichtet werden soll, ein.

4. Das Verfahren zur Implementierung von Tonübertragung in Videoüberwachung gemäß Anspruch 1, weiter umfassend: nach dem Empfangen durch das AS, der Tonübertragungsanfrage, die durch die CU gesendet wurde, und vor dem entsprechenden Weiterleiten durch das AS, der Tonübertragungsanfrage an jede PU, in deren Richtung die Übertragung gerichtet werden soll, über das Kern IMS, durchführen durch das AS einer Dienstautorisierung nach dem das AS die Tonübertragungsanfrage, die durch die CU (S303) gesendet wurde, empfängt, und nach dem die Dienstautorisierung erfolgreich ist, Weiterleiten entsprechend das AS der Tonübertragungsanfrage an jede PU, in deren Richtung die Übertragung gerichtet werden soll, über das Kern IMS.

5. Das Verfahren zur Implementierung von Tonübertragung in Videoüberwachung gemäß Anspruch 4, worin das Durchführen, durch das AS, der Dienstautorisierung Folgendes umfasst:
Abfragen, durch das AS, über Benutzerregistrierung entsprechend der CU gemäß der Tonübertragungsanfrage, dann Bestimmen, durch das AS, ob das AS die Tonübertragungsanfrage an jede PU, in deren Richtung die Übertragung gerichtet werden soll, weiterleiten kann entsprechend der erworbenen Benutzerregistrierung; und/oder Bestimmen durch das AS, ob das AS die Tonübertragungsanfrage an jede PU, in deren Richtung die Übertragung gerichtet werden soll, weiterleiten kann entsprechend dem derzeitigen Betriebszustand von jeder PU, in deren Richtung die Übertragung gerichtet werden soll; und
wenn bestimmt wird, dass das AS die Tonübertragungsanfrage an jede PU, in deren Richtung die Übertragung gerichtet werden soll, weiterleiten kann, Weiterleiten durch das AS der Tonübertragungsanfrage an jede PU, in deren Richtung die Übertragung gerichtet werden soll; andernfalls Zurücksenden, durch das AS, einer Information von Tonübertragungsanfrage-Fehler an die CU, und nicht Weiterleiten durch das AS, der Tonübertragungsanfrage.

6. Das Verfahren zur Implementierung von Tonübertragung in Videoüberwachung gemäß irgendeinem der Anspruch 1 bis 5, worin das Übertragen, durch die CU, von Audiodaten an jede PU, in deren Richtung die Übertragung gerichtet werden soll, Folgendes umfasst:
Senden durch die CU, von Audiodaten zu dem AS über den unidirektionalen Medienkanal von der CU zu dem AS, und Weiterleiten, durch das AS, der Audiodaten zu jeder PU, in deren Richtung die Übertragung gerichtet werden soll über den unidirektionalen Medienkanal von dem AS zu jeder PU, in deren Richtung die Übertragung gerichtet werden soll.

7. Das Verfahren zur Implementierung von Tonübertragung in Videoüberwachung gemäß irgendeinem der Ansprüche 1 bis 5, weiter umfassend:
wenn die Tonübertragung gestoppt werden muss, Trennen durch die CU, des Medienkanals zwischen der CU und dem AS, und Senden, durch die CU, einer Tonübertragungsstoppanfrage an das AS über das Kern IMS; und Weiterleiten, durch das AS, der Tonübertragungsstoppanfrage an jede PU, in deren Richtung die Übertragung gerichtet werden soll, über das Kern IMS; und
jeweils Empfangen, durch jede PU, in deren Richtung die Übertragung gerichtet werden soll, der Tonübertragungsstoppanfrage; Trennen, durch jede PU, in deren Richtung die Übertragung gerichtet werden soll, des Medienkanals zwischen dem AS und jeder PU, in deren Richtung die Übertragung gerichtet werden soll; Zurücksenden, durch jede PU, in deren Richtung die Übertragung gerichtet werden soll, an das AS einer Tonübertragungsstoppantwort über das Kern IMS; Weiterleiten, durch das AS, der Tonübertragungsstoppantwort an die CU über das Kern IMS, und Stoppen der Tonübertragung.

8. Das Verfahren zur Implementierung von Tonübertragung in Videoüberwachung gemäß Anspruch 7, worin die Tonübertragungsstoppanfrage eine Mitteilung zum Anfragen der Trennung ist, und die Tonübertragungsstoppantwort ist eine Trennungsantwortmitteilung.

9. Ein System zur Implementierung von Tonübertragung in Videoüberwachung, **dadurch gekennzeichnet, dass** sie eine Teilnehmereinheit, CU, ein Applikationsserver-Subsystem, AS, eine Kerneinheit eines Internetprotokolls, IP, ein Multimedia Subsystem, Kern IMS, und eine oder mehrere Betriebsstätten, PUs, in deren Richtung die Übertragung gerichtet werden soll, umfasst, worin
die CU konfiguriert ist über eine Kerneinheit eines Internetprotokolls, IP, ein Multimedia Substystem, Kern IMS, einen Medienkanal zwischen einer Teilnehmereinheit, CU, und einem Applikationsserver-Subsystem, AS, zu erstellen, und Tondatenübertragung an jede PU, in deren Richtung die Übertragung gerichtet werden soll, über den Medienkanal zwischen der CU und dem AS, und einem Medienkanal zwischen dem AS und jeder PU, in deren Richtung die Übertragung gerichtet werden soll, wenn Tonübertragung durchgeführt wird, zu übermitteln;
das AS ist konfiguriert, um über das Kern IMS den Medienkanal zwischen dem AS und jeder PU, in deren Richtung die Übertragung gerichtet werden soll, zu erstellen;
die CU ist weiter konfiguriert, um eine Tonübertragungsanfrage einschließlich einer Kennung für jede PU, in deren Richtung die Übertragung gerichtet werden soll, zu senden, und die Tonübertragungsanfrage an das AS über das Kern IMS weiterzuleiten;
das AS ist weiter konfiguriert, um die Tonübertragungsanfrage an jede PU, in deren Richtung die Übertragung gerichtet werden soll, über das Kern IMS entsprechend der Kennung für jede PU, in deren Richtung die Übertragung gerichtet werden soll in der Tonübertragungsanfrage, weiterzuleiten, jede PU, in deren Richtung die Übertragung gerichtet werden soll, ist konfiguriert, um die Tonübertragunganfrage jeweils zu empfangen, und eine Tonübertragungsantwort an das AS über das Kern IMS entsprechend zurückzusenden;
das AS ist weiter konfiguriert, die empfangene Tonübertragungsantwort an die CU über das Kern IMS weiterzuleiten; die CU ist weiter konfiguriert, eine Tonübertragungsbestätigung an das AS über das Kern IMS zu senden, nach dem die Tonübertragungsantwort erhalten wurde, und einen unidirektionalen Medienkanal von der CU zu dem AS zu erstellen;
das AS ist konfiguriert, die Tonübertragungsbestätigung jeweils an jede PU, in deren Richtung die Übertragung gerichtet werden soll, über das Kern IMS weiterzuleiten, und entsprechend einen unidirektionalen Medienkanal von dem AS zu jeder PU, in deren Richtung die Übertragung gerichtet werden soll, zu erstellen.

10. Das System zur Implementierung von Tonübertragung in Videoüberwachung gemäß Anspruch 9, worin die CU weiter konfiguriert ist, den Medienkanal zwischen der CU und dem AS zu trennen, wenn die Tonübertragung gestoppt werden muss, und eine Tonübertragungsstoppanfrage an das AS über das Kern IMS zu senden;
das AS ist weiter konfiguriert, die Tonübertragungsstoppanfrage an jede PU, in deren Richtung die Übertragung gerichtet werden soll, über das Kern IMS weiterzuleiten; und eine Tonübertragungsstoppantwort, die durch jede PU, in deren Richtung die Übertragung gerichtet werden soll, an die CU über das Kern IMS zurückgesendet wurde, weiterzuleiten, und die Tonübertragung zu stoppen;
jede PU, in deren Richtung die Übertragung gerichtet werden soll, ist weiter konfiguriert, um die Tonübertragungsstoppanfrage jeweils zu empfangen, den Medienkanal zwischen dem AS und jeder PU, in deren Richtung die Übertragung gerichtet werden soll, zu trennen, und die Tonübertragungsstoppantwort über das Kern IMS an das AS zurückzusenden.

## Revendications

1. Procédé de mise en oeuvre d'une diffusion audio en vidéosurveillance, **caractérisé en ce qu'**il comprend les étapes suivantes :
établir, par une unité d'abonné, CU, un canal de support avec un sous-système serveur d'applications, AS, par l'intermédiaire d'un noyau, appelé Core IMS, d'un sous-système multimédia du protocole IP, et établir, par l'AS, un canal de support via le noyau avec une ou plusieurs unités de locaux, PU, vers lesquelles la diffusion doit être dirigée ; et
diffuser, par la CU, des données audio vers chaque PU vers laquelle la diffusion doit être dirigée via le canal de support établi entre la CU et l'AS et le canal de support établi entre l'AS et chaque PU vers laquelle la diffusion doit être dirigée lors de l'exécution de la diffusion audio ;
dans lequel l'établissement, par une CU, d'un canal de support avec un AS par l'intermédiaire d'un noyau d'un sous-système multimédia IP, et l'établissement, par l'AS, d'un canal de support via le noyau avec une ou plusieurs PU vers lesquelles la diffusion doit être dirigée comprennent :
l'envoi, par la CU, d'une demande de diffusion audio comprenant un identifiant pour chaque PU vers laquelle la diffusion doit être dirigée, et le transfert de la demande de diffusion audio à l'AS via le noyau (S301, S302) ; le transfert, par l'AS, de la demande de diffusion audio à chaque PU vers laquelle la diffusion doit être dirigée via le noyau selon l'identifiant pour chaque PU vers laquelle la diffusion doit être dirigée dans la demande de diffusion audio (S304, S305, S306, S307) ;
la réception, par chaque PU vers laquelle la diffusion doit être dirigée, de la demande de diffusion audio de façon respective, le renvoi, par chaque PU vers laquelle la diffusion doit être dirigée, d'une réponse de diffusion audio à l'AS via le noyau de façon respective (S308, S309, S310, S311), et le transfert, par l'AS, de la réponse de diffusion audio reçue à la CU via le noyau (S312, S313) ; et
l'envoi, par la CU, d'un accusé de réception de diffusion audio à l'AS via le noyau après que la CU a reçu la réponse de diffusion audio, et l'établissement, par la CU, d'un canal de support unidirectionnel allant de la CU à l'AS (S314, S315) ; le transfert respectif, par l'AS, de l'accusé de réception de diffusion audio à chaque PU vers laquelle la diffusion doit être dirigée via le noyau, et l'établissement respectif, par l'AS, d'un canal de support unidirectionnel allant de l'AS à chaque PU vers laquelle la diffusion doit être dirigée (S316, S317, S318, S319).

2. Procédé de mise en oeuvre d'une diffusion audio en vidéosurveillance selon la revendication 1, comprenant en outre, avant l'envoi par la CU de la demande de diffusion audio :
la sélection, par la CU, d'une PU vers laquelle la diffusion doit être dirigée dans une liste d'unités de locaux sauvegardée localement, et l'acquisition, par la CU, d'un identifiant pour la PU vers laquelle la diffusion doit être dirigée.

3. Procédé de mise en oeuvre d'une diffusion audio en vidéosurveillance selon la revendication 1, dans lequel l'accusé de réception de diffusion audio transféré par la CU à l'AS comprend des informations du canal unidirectionnel allant de la CU à l'AS ; et l'accusé de réception de diffusion audio transféré par l'AS à chaque PU vers laquelle la diffusion doit être dirigée comprend des informations du canal unidirectionnel allant de l'AS à chaque PU vers laquelle la diffusion doit être dirigée.

4. Procédé de mise en oeuvre d'une diffusion audio en vidéosurveillance selon la revendication 1, comprenant en outre, après la réception par l'AS de la demande de diffusion audio envoyée par la CU et avant le transfert respectif par l'AS de la demande de diffusion audio à chaque PU vers laquelle la diffusion doit être dirigée via le noyau :
la réalisation, par l'AS, d'une autorisation de service après que l'AS a reçu la demande de diffusion audio envoyée par la CU (S303), et après le succès de l'autorisation de service, le transfert respectif, par l'AS, de la demande de diffusion audio à chaque PU vers laquelle la diffusion doit être dirigée via le noyau.

5. Procédé de mise en oeuvre d'une diffusion audio en vidéosurveillance selon la revendication 4, dans lequel la réalisation par l'AS d'une autorisation de service comprend :
demander par l'AS une information d'inscription d'utilisateur correspondant à la CU selon la demande de diffusion audio, puis déterminer par l'AS si l'AS peut transférer la demande de diffusion audio à chaque PU vers laquelle la diffusion doit être dirigée selon l'information d'inscription d'utilisateur acquise ; et/ou déterminer, par l'AS, si l'AS peut transférer la demande de diffusion audio à chaque PU vers laquelle la diffusion doit être dirigée selon l'état de fonctionnement en cours de chaque PU vers laquelle la diffusion doit être dirigée ; et
lorsqu'il est déterminé que l'AS peut transférer la demande de diffusion audio à chaque PU vers laquelle la diffusion doit être dirigée, transférer, par l'AS, la demande de diffusion audio à chaque PU vers laquelle la diffusion doit être dirigée ; sinon, renvoyer, par l'AS, une information d'échec de demande de diffusion audio à la CU, et ne pas transférer par l'AS la demande de diffusion audio.

6. Procédé de mise en oeuvre d'une diffusion audio en vidéosurveillance selon l'une quelconque des revendications 1 à 5, dans lequel la diffusion par la CU de données audio à destination de chaque PU vers laquelle la diffusion doit être dirigée comprend :
envoyer, par la CU, des données audio à l'AS via le canal de support unidirectionnel allant de la CU à l'AS, et transférer, par l'AS, les données audio à chaque PU vers laquelle la diffusion doit être dirigée via le canal de support unidirectionnel allant de l'AS à chaque PU vers laquelle la diffusion doit être dirigée.

7. Procédé de mise en oeuvre d'une diffusion audio en vidéosurveillance selon l'une quelconque des revendications 1 à 5, comprenant en outre :
lorsque la diffusion audio doit être arrêtée, déconnecter, par la CU, le canal de support entre la CU et l'AS, et envoyer, par la CU, une demande d'arrêt de diffusion audio à l'AS via le noyau ; et transférer, par l'AS, la demande d'arrêt de diffusion audio à chaque PU vers laquelle la diffusion doit être dirigée via le noyau ; et
recevoir respectivement, par chaque PU vers laquelle la diffusion doit être dirigée, la demande d'arrêt de diffusion audio ; déconnecter, par chaque PU vers laquelle la diffusion doit être dirigée, le canal de support entre l'AS et chaque PU vers laquelle la diffusion doit être dirigée ; renvoyer à l'AS, par chaque PU vers laquelle la diffusion doit être dirigée, une réponse d'arrêt de diffusion audio via le noyau ; transférer, par l'AS, la réponse d'arrêt de diffusion audio à la CU via le noyau, et arrêter la diffusion audio.

8. Procédé de mise en oeuvre d'une diffusion audio en vidéosurveillance selon la revendication 7, dans lequel la demande d'arrêt de diffusion audio est un message servant à demander la déconnexion, et la réponse d'arrêt de diffusion audio est un message répondant à la déconnexion.

9. Système permettant de mettre en oeuvre une diffusion audio en vidéosurveillance, **caractérisé en ce qu'**il comprend une unité d'abonné, CU, un sous-système serveur d'applications, AS, un noyau, appelé Core IMS, d'un sous-système multimédia du protocole IP, et une ou plusieurs unités de locaux, PU, vers lesquelles la diffusion doit être dirigée, dans lequel :
la CU est configurée pour établir, via un noyau d'un sous-système multimédia du protocole IP, un canal de support entre une unité d'abonné, CU, et un sous-système serveur d'applications, AS, et pour transmettre une diffusion de données audio à chaque PU vers laquelle la diffusion doit être dirigée via le canal de support entre la CU et l'AS et un canal de support entre l'AS et chaque PU vers laquelle la diffusion doit être dirigée lors de l'exécution de la diffusion audio ;
l'AS est configuré pour établir, via le noyau, le canal de support entre l'AS et chaque PU vers laquelle la diffusion doit être dirigée ;
la CU est en outre configurée pour envoyer une demande de diffusion audio comprenant un identifiant pour chaque PU vers laquelle la diffusion doit être dirigée, et pour transférer la demande de diffusion audio à l'AS via le noyau ;
l'AS est en outre configuré pour transférer la demande de diffusion audio à chaque PU vers laquelle la diffusion doit être dirigée via le noyau selon l'identifiant pour chaque PU vers laquelle la diffusion doit être dirigée dans la demande de diffusion audio ;
chaque PU vers laquelle la diffusion doit être dirigée est configurée pour recevoir la demande de diffusion audio de façon respective, et pour renvoyer une réponse de diffusion audio à l'AS via le noyau de façon respective ;
l'AS est en outre configuré pour transférer la réponse de diffusion audio reçue à la CU via le noyau ;
la CU est en outre configurée pour envoyer un accusé de réception de diffusion audio à l'AS via le noyau après avoir reçu la réponse de diffusion audio, et pour établir un canal de support unidirectionnel allant de la CU à l'AS ;
l'AS est configuré pour transférer respectivement l'accusé de réception de diffusion audio à chaque PU vers laquelle la diffusion doit être dirigée via le noyau, et pour établir respectivement un canal de support unidirectionnel allant de l'AS à chaque PU vers laquelle la diffusion doit être dirigée.

10. Système permettant de mettre en oeuvre une diffusion audio en vidéosurveillance selon la revendication 9, dans lequel la CU est en outre configurée pour déconnecter le canal de support entre la CU et l'AS lorsque la diffusion audio doit être arrêtée, et pour envoyer une demande d'arrêt de diffusion audio à l'AS via le noyau ;
l'AS est en outre configuré pour transférer la demande d'arrêt de diffusion audio à chaque PU vers laquelle la diffusion doit être dirigée via le noyau ; et pour transférer une réponse d'arrêt de diffusion audio renvoyée par chaque PU vers laquelle la diffusion doit être dirigée à la CU via le noyau, et arrêter la diffusion audio ;
chaque PU vers laquelle la diffusion doit être dirigée est en outre configurée pour recevoir respectivement la demande d'arrêt de diffusion audio, déconnecter le canal de support entre l'AS et chaque PU vers laquelle la diffusion doit être dirigée, et renvoyer à l'AS la réponse d'arrêt de diffusion audio via le noyau.
